# EUROPÄISCHE PATENTSCHRIFT

(11) **EP 0 995 249 B1**
(45) Veröffentlichungstag und Bekanntmachung des Hinweises auf die Patenterteilung: **11.06.2003**
(21) Anmeldenummer: 98947322.8
(22) Anmeldetag: 09.07.1998
(51) Int. Cl.: H02B 13/02

(54) **BEDARFSORIENTIERTE MITTELSPANNUNGS-SCHALTANLAGE**
NEED-ORIENTED MEDIUM VOLTAGE SWITCHBOARD PLANT
SYSTEME DE DISTRIBUTION ELECTRIQUE MOYENNE TENSION ORIENTE BESOINS

(30) Priorität: 09.07.1997 DE 19730260
(43) Veröffentlichungstag der Anmeldung: 26.04.2000
(73) Patentinhaber: SIEMENS AKTIENGESELLSCHAFT, 80333 München (DE)
(72) Erfinder: KOPKE, Volker, D-91054 Buchenhof (DE); STOLZ, Rainer, D-63477 Maintal (DE); BISCHUR, Olaf, D-63762 Grossostheim (DE); MOSLER, Thomas, D-60594 Frankfurt (DE); SCHUDT, Karl, D-61203 Reichelsheim (DE); WAGNER, Dieter, D-63477 Maintal (DE)
(86) Internationale Anmeldenummer: DE9802040
(87) Internationale Veröffentlichungsnummer: WO99003181

(56) Entgegenhaltungen:
- DE-A- 2 325 397
- DE-A- 3 337 276
- DE-A- 4 014 099
- DE-A- 4 111 586
- DE-U- 29 622 654
- FR-A- 2 116 851

## Beschreibung

Die Erfindung betrifft eine metallgekapselte, luftisolierte Mittelspannungs-Schaltanlage mit einem oder mehreren Funktionsraumbereichen zur Aufnahme von Schaltgeräten und/oder Kabelanschlüssen und/oder Sammelschienen und einem Niederspannungsraum, wobei die Mittelspannungs-Schaltanlage durch ein modularstrukturiertes Schaltfeld realisiert ist, das modularstrukturierte Schaltfeld eine anlagentypenorientierte Anzahl von Schotträumen enthält, die Schotträume untereinander mit einer funktionsorientierten Anzahl von Durchführungseinrichtungen verbunden sind und die Schotträume aus einem Modulraum und einem Sammelschienenraum und einem Anschlußraum gebildet sind, die Schotträume jeweils mindestens eine Druckentlastungseinrictung aufweisen.

Die bekannte Mittelspannungs-Schaltanlage der eingangs definierten Art ist aus der DE 296 22654 U1 bekannt. Hier sind die einzelnen Komponenten innerhalb der Mittelspannungs-Schaltanlage in relativ unterschiedlich gestalteten Funktionsräumen untergebracht. So sind beispielsweise die Sammelschienen und die Leistungsschalter so um die Klappen von einem Druckentlastungskanal positioniert, daß die Schaltfelder dadurch zwangsläufig in ihrer konstruktiven Ausgestaltung festgelegt sind.
Des Weiteren ist aus der DE-40 14 099 A ein Schaltfeld einer gekapselten Mittelspannungs-Schaltanlage bekannt, die durch Schottwände in drei Funktionsräume unterteilt ist. Dies Unterteilung erfolgt im wesentlichen zur Verbesserung der Personensicherheit und zur Vereinfachung der Vorfertigung von Baugruppen mit geringer Bautiefe. Darüber hinaus ist ein zentraler Entlastungskanal vorgesehen, der im Falle einer Störung im Anschlußraum die entsprechenden Lichtbogengase gefahrlos nach der Oberseite des Schaltfeldes ableitet. Die der Erfindung zugrundeliegende Aufgabe besteht darin, für die eingangs definierten metallgekapselten, luftisolierten Mittelspannungs-Schaltanlagen ein Konzept anzugeben, mit dem die unterschiedlichsten Anlagenkonfigurationen mit einer minimalen Anzahl von verschiedenartigen Bausteinen realisierbar sind und darüber hinaus ohne Einschränkung der in dieser Technik üblichen Sicherheitsanforderungen eine erhebliche Reduzierung des Bauvolumens gegenüber den derzeit bekannten Mittelspannungs-Schaltanlagen erreicht ist. Erfindungsgemäß wird dies durch die Merkmale
1.1 ein weiterer Schottraum als Sammelschieneneinbautenraum ist vorgesehen,
1.2 der Sammelschienenraum und der weitere Schottraum sind über eine weitere Durchführungseinrichtung verbunden.

Die metallgekapselten, luftisolierten Mittelspannungs-Schaltanlagen mit modularstrukturierten Schaltfeldern, die entsprechend den verschiedensten Anlagentypen eine entsprechende Anzahl von voneinander getrennten Schotträumen aufweisen können, lassen sich gegenüber den bekannten Anlagen dieser Kategorie in wesentlich kompakterer Bauweise zusammensetzen. Die verschiedenen Einzelkomponenten der Mittelspannungs-Schaltanlagen werden in sogenannten Funktionsmodulen vorgefertigt und vor Ort bedarfsgerecht zusammengefügt. Die Durchführungseinrichtung, die den einzelnen Schottraum auch mit seinem erweiterten Schottraum verbindet, bieten u. a. die Möglichkeit, bei Erweiterungen von Anlagen auf die üblichen kostspieligen Isoliermaßnahmen zu verzichten. Die jedem der einzelnen Schotträume zugeordnete eigenen Druckentlastungseinrichtung erhöht zusätzlich die Sicherheit dieser modularstrukturierten Schaltfelder.

Gemäß einer vorteilhaften Ausgestaltung der Erfindung sind die Merkmale
2.1 die Durchführungseinrichtungen sind realisiert durch Sammelschienendurchführungen und/oder durch Durchführungsstützer und/oder durch Durchführungswandler,
2.2 der Modulraum dient alternativ zur Aufnahme einer Einschubeinrichtung oder einer Wageneinschubeinrichtung,
2.3 die Einschubeinrichtung oder die Wageneinschubeinrichtung ist alternativ zu einem Leistungsschaltermodul durch ein Trennmodul oder durch ein Transformatorenabgangsmodul oder durch ein Meßmodul realisiert,
vorgesehen.
Mit dieser streng funktionellen Unterteilung in Modulraum, Sammelschienenraum und Anschlußraum, die untereinander über die Durchführungseinrichtungen in Form von Durchführungsstützer, Durchführungswandler und Sammelschienendurchführungen verbunden sind, lassen sich die unterschiedlichen Anlagenkonfigurationen in einfacher Weise realisieren. Dabei ist der Modulraum derart gestaltet, daß einerseits eine komplette Wageneinschubeinrichtung Aufnahme findet und andererseits auch nur eine Einschubeinrichtung allein im Modulraum untergebracht sein kann. Diese Einschubeinrichtung kann dann, wie die vorab erwähnte Wageneinschubeinrichtung, mit Hilfe eines fahrbaren Wagengestells direkt aus bzw. in den Modulraum gefahren werden. Es sind in diesem Zusammenhang keine konstruktiven Änderungen innerhalb und außerhalb der Mittelspannungs-Schaltanlage notwendig.

Gemäß einer weiteren vorteilhaften Ausgestaltung der Erfindung ist das Merkmal
3.1 der Niederspannungs-Schaltraum ist gegenüber dem Modulraum thermisch entkoppelt,
vorgesehen.
Als besonders vorteilhaft ist in diesem Zusammenhang anzusehen, daß der Niederspannungsschaltraum durch einem entsprechenden räumlichen Abstand vom Modulraum gegenüber diesem praktisch thermisch entkoppelt ist. Durch diese Maßnahme ist die Sicherheit noch zusätzlich erhöht hinsichtlich der nur sehr geringen beziehungsweise gar keinen Wärmebeeinträchtigung der Relais und sonstiger Schaltgeräte innerhalb des Niederspannungs-Schaltraumes.

Eine weitere vorteilhafte Ausgestaltung der Erfindung sieht die Merkmale
4.1 hinter dem Modulraum schließt sich im mittleren Bereich der Sammelschienenraum, im oberen Bereich ein Sammelschieneneinbautenraum und im unteren Bereich der Anschlußraum an,
4.2 der Sammelschieneneinbautenraum und der Anschlußraum weisen jeweils mindestens eine Druckentlastungseinrichtung auf,
4.3 die Druckentlastungseinrichtungen des Modulraumes, des Sammelschieneneinbauraumes und des Anschlußraumes sind vorzugsweise im oberen Raumabgrenzungsbereich angeordnet,
vor.
Mit der strikten Trennung von Sammelschienenraum und Sammelschieneneinbautenraum ist erreicht, daß beispielsweise bei einem Störfall im Sammelschieneneinbautenraum die Sammelschienen im Sammelschienenraum nicht beeinträchtigt sind, beziehungsweise umgekehrt die Sammelschieneneinbauten beim Störungsfall im Sammelschienenraum unbeschädigt bleiben. Dazu tragen im wesentlichen auch die Druckentlastungseinrichtungen bei, die praktisch für jeden Schottraum vorgesehen sind.

Gemäß einer weiteren vorteilhaften Ausgestaltung der Erfindung sind die Merkmale
5.1 der Anschlußraum ist im unteren Bereich durch einen Zusatzanschlußraum erweiterbar,
5.2 der Zusatzanschlußraum ist mit dem Anschlußraum über eine Durchführungseinrichtung verbunden,
5.3 der Zusatzanschlußraum ist mittels einer Druckentlastungseinrichtung mit einem hinter dem Anschlußraum vorgesehenen Druckentlastungsraum verbunden,
vorgesehen.
Mit dem sich an den Anschlußraum anschließenden Zusatzanschlußraum, in dem beispielsweise ein Kabel von unterhalb der Mittelspannungs-Schaltanlage zuführbar und über die Durchführungseinrichtung direkt mit einer Sammelschiene im Anschlußraum verbindbar ist, können Kabelwechsel durchgeführt werden, ohne entsprechende Isoliermaßnahmen im Anschlußraum selbst durchführen zu müssen.

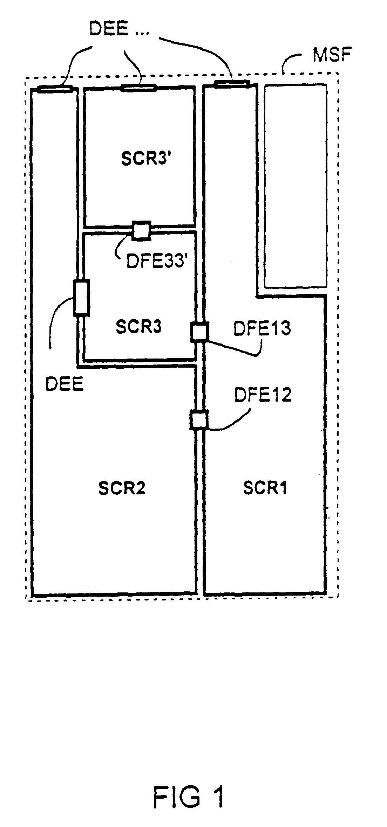

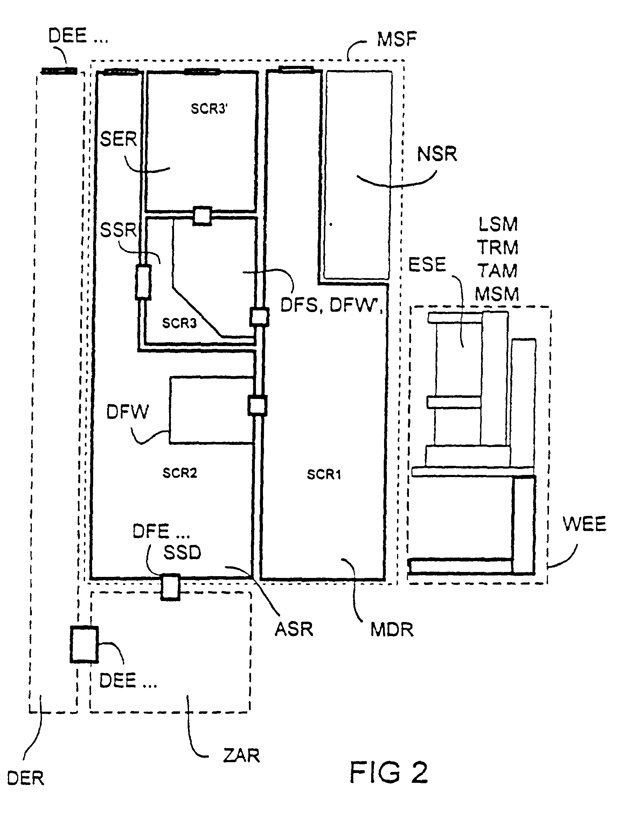

Die Erfindung wird durch zwei figürlich dargestellte Ausführungsbeispiele näher erläutert, wobei die Figur 1 einen möglichen modularstrukturierten Grundausbau eines Schaltfeldes der metallgekapselten luftisolierten Mittelspannungs-Schaltanlage erkennen läßt und die Figur 2 die unterschiedlichen Anlagenkonfigurationen diese Mittelspannungs-Schaltanlagen verdeutlicht.

Die Figur 1 stellt einen möglichen Grundausbau eines modularstrukturierten Schaltfeldes MSF der metallgekapselten, luftisolierten Mittelspannungs-Schaltanlage dar. Wie ersichtlich, sind in dem Schaltfeld MSF eine anlagenorientierte Anzahl von Schotträumen SCR1, SCR2, SCR3, SCR3' vorgesehen, die untereinander mit einer funktionsorientierten Anzahl von Durchführungseinrichtungen DFE12, DFE13, DFE33' verbunden sind. Weiterhin ist ersichtlich, daß die einzelnen Schotträume SCR1, SCR2, SCR3, SCR3' jeweils mit einer separaten Druckentlastungseinrichtung DEE... ausgestattet sind. Vorzugsweise liegen die Druckentlastungseinrichtungen DEE... der Schotträume SCR1, SCR2 und SCR3' im oberen Raumabgrenzungsbereich derselben, so daß im Störungsfall die in diesen Schotträumen SCR1, SCR2, und SCR3' entstehende Wärme unmittelbar nach außen, d. h. aus der Mittelspannungs-Schaltanlage, herausgeführt werden kann. Die dem Schottraum SCR3 zugeordnete Drukkentlastungseinrichtung DEE hingegen führt im Störfall die Wärme über den angrenzenden Schottraum SCR2 und deren Druckentlastungseinrichtung DEE... ab. Damit sind die Schotträume SCR3 und SCR3' praktisch thermisch entkoppelt mit dem Ergebnis, daß auftretende Störfälle in einem der Schotträume SCR3, SCR3' keinerlei negative Rückwirkungen auf den jeweils anderen Schottraum SCR3, SCR3' haben.

Die Figur 2 zeigt nähere Einzelheiten von Ausgestaltungsmöglichkeiten des modularstrukturierten Schaltfeldes MSF, mit der die bekannten Mittelspannungs-Schaltanlagen, die, wie eingangs erwähnt, beispielsweise als Einspeise- und Abgangsfeld, als Längskupplung-Leistungsschalterfeld, als Transformatorenabgangsfeld, und als Meß- oder Stichfeld etc. ausgeführt sein können, in einfacher Weise als metallgekapselte, luftisolierte Mittelspannungs-Schaltanlagen zusammensetzbar sind.
Im Einzelnen ist erkennbar, daß der erste Schottraum SCR1 dem sog. Modulraum MDR zur wahlweise Aufnahme einer Einschubeinrichtung ESE oder einer Wageneinschubeinrichtung WEE dient, während der zweite Schottraum SCR2 den sog. Anschlußraum ASR mit Durchführungswandler DFW, Durchführungseinrichtung DFE..., die ggf. als Sammelschienendurchführung SSD ausgeführt ist, aufnimmt.
Der dritte Teil-Schottraum SCR3 bildet den sog. Sammelschienenraum SSR, der ausschließlich der Aufnahme der Sammelschienen des modularstrukturierten Schaltfeldes MSF dient, in dem sich der Durchführungsstützer DFS und ggf. ein weiterer Durchführungswandler DFW' befindet, während in dem darüberliegenden weiteren dritten Teil-Schottraum SCR3' der Sammelschieneneinbautenraum SER angeordnet ist. Der Sammelschienenraum SSR und der Sammelschieneneinbautenraum SER sind also zur Erhöhung der Anlagensicherheit druck- und wärmeunabhängig voneinander angeordnet.

Der Figur 2 ist außerdem zu entnehmen, daß die Einschubeinrichtung ESE bzw. die Wageneinschubeinrichtung WEE zur Realisierung der unterschiedlichen Anlagenkonfigurationen als Leistungsschaltermodul LSM, oder als Trennmodul TRM, oder als Transformatorenabgangsmodul TAM, oder als Meßmodul MSM ausgeführt sein kann. Durch die unterschiedlichen Strichstärken innerhalb der Wageneinschubeinrichtung WEE für das nicht bezeichnete Wagengestell und für die Einschubeinrichtung ESE ist angedeutet, daß die Einschubeinrichtung ESE mit einem nicht näher bezeichneten Wagengestell in und aus den Modulraum MDR gefahren werden kann, nachdem die entsprechenden Kopplungsvorgänge veranlaßt sind.

Eine weitere Ausbauvariante der metallgekapselten, luftisolierten Mittelspannungs-Schaltanlage ist durch die unterbrochen Linien unterhalb und hinter dem modularstrukturierten Schaltfeld MSF angedeutet. So kann der Anschlußraum ASR für den Fall der unteren Kabelzuführung durch der Zusatzanschlußraum ZAR erweitert sein, der seinerseits zum darüberliegenden Anschlußraum ASR mittels einer Durchführungseinrichtung DFE... verbunden ist, so daß das Anschlußkabel beispielsweise direkt mit dem im Anschlußraum ASR gelegenen, nicht dargestellten Sammelschienenanschluß verbindbar ist. Ein Anschlußkabelwechsel kann in diesem Falle ohne Beeinträchtigung des darüberliegenden Schottraumes SCR 2, dem Anschlußraum ASR, erfolgen.
Weiterhin ist auch der Zusatzanschlußraum ZAR mit einer Drukkentlastungseinrichtung DEE... versehen, wobei hier der Druckausgleich über den hinter dem modularstrukturierten Schaltfeld MSF angeordneten Druckentlastungsraum DER erfolgt, der ebenfalls mit einer entsprechenden Druckentlastungseinrichtung DEE... in seinem oberen Raumabgrenzungsbereich ausgestattet ist.

## Patentansprüche

1. Metallgekapselte, luftisolierte Mittelspannungs-Schaltanlage mit einem oder mehreren Funktionsraumbereichen zur Aufnahme von Schaltgeräten und/oder Kabelanschlüssen und/oder Sammelschienen und einem Niederspannungsraum (NSR), wobei die Mittelspannungs-Schaltanlage durch ein modularstrukturiertes Schaltfeld (MSF) realisiert ist,
das modularstrukturierte Schaltfeld (MSF) eine anlagentypenorientierte Anzahl von Schotträumen (SCR...) enthält, die Schotträume (SCR...) untereinander mit einer funktionsorientierten Anzahl von Durchführungseinrichtungen (DFE...) verbunden sind und
die Schotträume (SCR...) aus einem Modulraum (MOR) und einem Sammelschienenraum (SSR) und einem Anschlußraum (ASR) gebildet sind,
die Schotträume (SCR...) jeweils mindestens eine Druckentlastungseinrichtung (DEE...) aufweisen,
**gekennzeichnet durch** die Merkmale
1.1 im weiterer Schottraum (SCR3') als Sammelschieneneinbautenraum (SER) ist vorgesehen,
1.2 der Sammelschienenraum (SCR3, SSR) und der weitere Schottraum (SCR3') sind über eine weitere Durchführungseinrichtung (DFF33') verbunden.

2. Metallgekapselte, luftisolierte Mittelspannungs-Schaltanlage nach Patentanspruch 1,
**gekennzeichnet durch** die Merkmale
2.1 die Durchführungseinrichtungen (DFE...) sind realisiert **durch** Sammelschienendurchführungen (SSD...) und/oder **durch** Durchführungsstützer (DFS...) und/oder **durch** Durchführungswandler (DFW...),
2.2 der Modulraum (MDR) dient alternativ zur Aufnahme einer Einschubeinrichtung (ESE) oder einer Wageneinschubeinrichtung (WEE),
2.3 die Einschubeinrichtung (ESE) oder die Wageneinschubeinrichtung (WEE) ist alternativ zu einem Leistungsschaltermodul (LSM) **durch** ein Trennmodul (TRM) oder **durch** ein Transformatorenabgangsmodul (TAM) oder **durch** ein Meßmodul (MSM) realisiert.

3. Metallgekapselte, luftisolierte Mittelspannungs-Schaltanlage nach den Patentansprüchen 1 und 2,
**gekennzeichnet durch** das Merkmal
3.1 der Niederspannungs-Schaltraum (NSR) ist gegenüber dem Modulraum (MDR) thermisch entkoppelt.

4. Metallgekapselte, luftisolierte Mittelspannungs-Schaltanlage nach den Patentansprüchen 1 bis 3,
**gekennzeichnet durch** die Merkmale
4.1 hinter dem Modulraum (MDR) schließt sich im mittleren Bereich der Sammelschienenraum (SSR), im oberen Bereich ein Sammelschieneneinbautenraum (SER) und im unteren Bereich der Anschlußraum (ASR) an,
4.2 der Sammelschieneneinbautenraum (SER) und der Anschlußraum (ASR) weisen jeweils mindestens eine Druckentlastungseinrichtung (DEE...) auf,
4.3 die Druckentlastungseinrichtungen (DEE...) des Modulraumes (MDR), des Sammelschieneneinbauraumes (SER) und des Anschlußraumes (ASR) sind vorzugsweise im oberen Raumabgrenzungsbereich angeordnet.

5. Metallgekapselte, luftisolierte Mittelspannungs-Schaltanlage nach Patentansprüchen 4,
**gekennzeichnet durch** die Merkmale
5.1 der Anschlußraum (ASR) ist im unteren Bereich **durch** einen Zusatzanschlußraum (ZAR) erweitert,
5.2 der Zusatzanschlußraum (ZAR) ist mit dem Anschlußraum (ASR) über eine Durchführungseinrichtung (DFE...), verbunden,
5.3 der Zusatzabschlußraum (ZAR) ist mittels einer Druckentlastungseinrichtung (DEE...) mit einem hinter dem Anschlußraum (ASR) vorgesehenen Druckentlastungsraum (DER) verbunden.

## Claims

1. Metal-enclosed, air-insulated medium-voltage switchplant having one or more function sections for holding switching devices and/or cable connections and/or busbars, and a low-voltage compartment, the medium-voltage switchplant being implemented as a switchpanel (MSF) of modular structure,
the switchpanel (MSF) of modular structure including a number of compartments (SCR...) dictated by the plant,
the compartments (SCR...) being interconnected by a number of bushing devices (DFE...) dictated by function,
the compartments (SCR...) being formed from a module space (MOR) and a busbar space (SSR) and a wiring space (ASR), and
the compartments (SCR...) each having at least one pressure relief device (DEE...),
**characterized by** the features that
1.1 a further compartment (SCR3') is provided as busbar interior components compartment (SER), and
1.2 the busbar compartment (SCR3, SSR) and the further compartment (SCR3') are connected via a further bushing device (DFF33').

2. Metal-enclosed, air-insulated medium-voltage switchplant according to Patent Claim 1, **characterized by** the features that
2.1 the bushing devices (DFE...) are implemented as busbar bushings (SSD...) and/or as bushing insulators (DFS...) and/or as bushing-type transformers (DFW...),
2.2 the module space (MDR) serves alternately to hold a withdrawable device (ESE) or a truck-type withdrawable device (WEE), and
2.3 the withdrawable device (ESE) or the truck-type withdrawable device (WEE) is implemented, as an alternative to a circuit-breaker module (LSM), as an isolating module (TRM) or as an outgoing transformer module (TAM) or as a measurement module (MSM).

3. Metal-enclosed, air-insulated medium-voltage switchplant according to Patent Claims 1 and 2, **characterized by** the feature that
3.1 the low-voltage switchroom (NSR) is thermally decoupled with respect to the module space (MDR).

4. Metal-enclosed, air-insulated medium-voltage switchplant according to Patent Claims 1 to 3, **characterized by** the features that
4.1 adjoining behind the module space (MDR) are the busbar compartment (SSR) in the middle region, a busbar interior components compartment (SER) in the upper region, and the wiring space (ASR) in the lower region,
4.2 the busbar interior components compartment (SER) and the wiring space (ASR) each have at least one pressure relief device (DEE...), and
4.3 the pressure relief devices (DEE...) of the module space (MDR), of the busbar interior components compartment (SER) and of the wiring space (ASR) are preferably arranged in the upper space-delimiting region.

5. Metal-enclosed, air-insulated medium-voltage switchplant according to Patent Claim 4, **characterized by** the features that
5.1 the wiring space (ASR) is extended in the lower region by an additional wiring space (ZAR),
5.2 the additional wiring space (ZAR) is connected to the wiring space (ASR) via a bushing device (DFE...), and
5.3 the additional wiring space (ZAR) is connected by means of a pressure relief device (DEE...) to a pressure relief space (DER) provided behind the wiring space (ASR).

## Revendications

1. Système de distribution électrique moyenne tension à isolation par de l'air et à blindage métallique, comprenant une ou plusieurs parties espace de fonction destinées à recevoir des appareils de commutation et/ou des bornes de câble et/ou des barres collectrices et un espace (NSR) basse tension, le système de distribution électrique moyenne tension étant réalisé par un champ (MSF) de couplage de structure modulaire,
Le panneau (MSF) de couplage de structure modulaire comportant un certain nombre d'espaces (SCR...) de cloisonnement à orientation de type installation, les espaces (SCR...) de cloisonnement étant reliés entre eux par un certain nombre de dispositifs (DFE...) de traversée à orientation fonction et
les espaces (SCR...) de cloisonnement sont formés par d'un espace (MDR) de module et d'un espace (SCR) de barre collectrice et d'un espace (ASR) de borne,
les espaces (SCR....) de cloisonnement ont respectivement au moins un dispositif (DEE....) de détente de la pression,
**caractérisés par** les caractéristiques
1.1 il est prévu un espace (SCR3') de cloisonnement supplémentaire en tant qu'espace (SER) encastré de barre collectrice,
1.2 l'espace (SCR3, SSR) de barre collectrice et l'autre espace (SCR3') de cloisonnement sont reliés par un autre dispositif (DFF33') de traversée.

2. Système de distribution électrique moyenne tension à isolement par de l'air et à blindage métallique suivant la revendication 1, **caractérisé par** les caractéristiques
2.1 les dispositifs (DFE...) de traversée sont réalisés par des traversées (SSD...) à barre collectrice et/ou par des appuis (DFS...) de traversée et/ou par des transformateurs (DFW...) de traversée,
2.2 l'espace (MDR) de module sert alternativement à recevoir un dispositif (ESE) d'enfichage ou un dispositif (WEE) d'enfichage à chariot,
2.3 le dispositif enfichable à chariot est réalisé alternativement en un module (LSM) de disjoncteur par un module (TRM) de séparation ou par un module (TAM) de sortie de transformateur ou par un module (MSM) de mesure.

3. Système de distribution électrique moyenne tension à isolement par de l'air et à blindage métallique suivant les revendications 1 et 2, **caractérisé par** la caractéristique
3.1 l'espace (NSR) de commutation basse tension est découplé thermiquement de l'espace (MDR) de module.

4. Système de distribution électrique moyenne tension à isolement par de l'air et à blindage métallique suivant les revendications 1 à 3, **caractérisé par** les caractéristiques
4.1 derrière l'espace (MDR) de module se raccorde dans la partie médiane l'espace (SSR) de barre collectrice, dans la partie supérieure un espace (SER) d'encastrement de la barre collectrice et dans la partie inférieure l'espace (ASR) de borne,
4.2 l'espace (SER) d'encastrement de barre collectrice et l'espace (ASR) de borne ont respectivement au moins un dispositif (DEE...) de détente de la pression,
4.3 les dispositifs (DEE...) de détente de la pression de l'espace (MDR) de module, de l'espace (SER) d'encastrement de la barre collectrice et de l'espace (ASR) de borne sont disposés de préférence dans la partie supérieure de délimitation de l'espace.

5. Système de distribution électrique moyenne tension à isolement par de l'air et à blindage métallique suivant la revendication 4, **caractérisé par** les caractéristiques
5.1 l'espace (ASR) de borne est élargi dans la partie inférieure par un espace (ZAR) de borne supplémentaire,
5.2 l'espace (ZAR) de borne supplémentaire est relié à l'espace (ASR) de borne par un dispositif (DFE...) de traversée,
5.3 l'espace (ZAR) de borne supplémentaire est relié au moyen d'un dispositif (DEE....) de détente de la pression à un espace (DER) de détente de la pression prévu derrière l'espace (ASR) de borne.
